(19) Europäisches Patentamt
European Patent Office
Office européen des brevets

(11) **EP 4 734 427 A1**

(12) **EUROPEAN PATENT APPLICATION**
published in accordance with Art. 153(4) EPC

(43) Date of publication:
**29.04.2026 Bulletin 2026/18**

(21) Application number: **24829770.7**

(22) Date of filing: **23.01.2024**

(51) International Patent Classification (IPC):
*H04L 5/00* (2006.01)   *H04L 25/03* (2006.01)

(52) Cooperative Patent Classification (CPC):
**H04L 5/00; H04L 25/03**

(86) International application number:
**PCT/CN2024/073699**

(87) International publication number:
**WO 2025/001107 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.06.2023  CN 202310786891**

(71) Applicant: ZTE Corporation
**Shenzhen, Guangdong  518057 (CN)**

(72) Inventors:
• YU, Jingxiang
  **Shenzhen, Guangdong 518057 (CN)**
• LIN, Wei
  **Shenzhen, Guangdong 518057 (CN)**
• RUI, Hua
  **Shenzhen, Guangdong 518057 (CN)**
• XU, Xiaojing
  **Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **DATA SENDING METHOD, DATA RECEIVING METHOD, COMMUNICATION APPARATUS, AND STORAGE MEDIUM**

(57)   Embodiments of the present disclosure provide a data sending method, a data receiving method, a communication apparatus, and a storage medium. The data sending method comprises: obtaining data to be transmitted; performing signal generation processing on the data to be transmitted to obtain a communication signal, wherein the signal generation processing comprises resource mapping processing, precoding processing, and pre-equalization processing; and sending the communication signal.

```
┌─────────────────────────────────────────────────────────┐
│   A sending end obtains data to be transmitted          │⌇ S101
└─────────────────────────────────────────────────────────┘
                            │
                            ▼
┌─────────────────────────────────────────────────────────┐
│ The sending end performs signal generation processing   │
│ on the data to be transmitted to obtain a communication │⌇ S102
│ signal, wherein the signal generation processing        │
│ comprises resource mapping processing, precoding        │
│ processing, and pre-equalization processing             │
└─────────────────────────────────────────────────────────┘
                            │
                            ▼
┌─────────────────────────────────────────────────────────┐
│   The sending end sends the communication signal        │⌇ S103
└─────────────────────────────────────────────────────────┘
```

FIG. 2

**Description**

The present disclosure claims priority to Chinese Patent Application No. 202310786891.7, filed on June 29, 2023, which is hereby incorporated by reference in its entirety.

TECHNICAL FIELD

The present disclosure relates to the technical field of communications, and in particular, to a data sending method, a data receiving method, a communication apparatus, and a storage medium.

BACKGROUND

In a wireless mobile communication system, due to the fact that wireless channels are not fixed and predictable like wired channels, but have a high degree of randomness, the performance of the wireless mobile communication system is greatly affected by wireless channels, such as shadow fading and frequency selective fading. In order to accurately recover transmitted signals from a transmitting end at a receiving end, the receiving end usually adopts the channel equalization technology to compensate for channel fading. The channel equalization technology requires acquiring channel state information (CSI) in advance, so the wireless mobile communication system usually performs channel estimation by sending pilot symbols, so as to acquire accurate CSI, and then use the acquired channel state information for channel equalization to eliminate signal waveform distortion caused by a channel.

SUMMARY

In one aspect, a data sending method is provided in the embodiments of the present disclosure. The data sending method includes: acquiring data to be transmitted; performing signal generation processing on the data to be transmitted to obtain a communication signal, where the signal generation processing includes resource mapping processing, precoding processing, and pre-equalization processing; and sending the communication signal.

In another aspect, a data receiving method is provided in the embodiments of the present disclosure. The data receiving method includes: receiving a communication signal, where the communication signal includes a data pilot symbol used for channel estimation; and performing signal analysis processing on the communication signal to obtain transmission information, where the signal analysis processing includes hard decision processing for the data pilot symbol.

In yet another aspect, a communication apparatus is provided in the embodiments of the present disclosure. The communication apparatus includes a transceiver module and a processing module. The transceiver module is configured to acquire data to be transmitted; the processing module is configured to perform signal generation processing on the data to be transmitted to obtain a communication signal. The signal generation processing includes resource mapping processing, precoding processing, and pre-equalization processing. The transceiver module is further configured to send the communication signal.

In yet another aspect, a communication apparatus is provided in the embodiments of the present disclosure. The communication apparatus includes a receiving module and a processing module. The receiving module is configured to receive a communication signal, where the communication signal includes a data pilot symbol used for channel estimation; the processing module is configured to perform signal analysis processing on the communication signal to obtain transmission information, where the signal analysis processing includes hard decision processing for the data pilot symbol.

In yet another aspect, a communication apparatus is provided in the embodiments of the present disclosure, and the communication apparatus includes: a memory and a processor. The memory is coupled to the processor, the memory is configured to store computer program instructions executable for the processor, and the processor, upon the computer program instructions being executed, implements the methods in above-mentioned aspects.

In yet another aspect, a computer-readable storage medium is provided in the embodiments of the present disclosure. The computer-readable storage medium stores computer program instructions, and in response to that the computer program instructions are executed on a computer (e.g., a communication apparatus), the method according to the above-mentioned aspects is implemented.

In yet another aspect, a computer program product is provided in the embodiments of the present disclosure. The computer program product includes computer program instructions, upon the computer program instructions being executed, the methods according to the above-mentioned aspects is implemented.

BRIEF DESCRIPTION OF THE DRAWINGS

Accompanying drawings are used to provide a further understanding of technical solutions of the present disclosure, and are constituted as a part of the specification, which are used to explain the technical solutions of the present disclosure together with the embodiments of the present disclosure, and do not constitute a limitation on the technical solutions of the present disclosure.

FIG. 1 is a schematic diagram of an architecture of a communication system according to the embodiments of the present disclosure.
FIG. 2 is a flowchart of a data sending method according to the embodiments of the present disclosure.
FIG. 3 is a schematic diagram of an architecture of a transmitter according to the embodiments of the present disclosure.
FIG. 4A is a schematic diagram of resource mapping processing according to the embodiments of the present disclosure.
FIG. 4B is another schematic diagram of resource mapping processing according to the embodiments of the present disclosure.
FIG. 4C is yet another schematic diagram of resource mapping processing according to the embodiments of the present disclosure.
FIG. 5 is a schematic diagram of pre-processing according to the embodiments of the present disclosure.
FIG. 6 is a flowchart of a data receiving method according to the embodiments of the present disclosure.
FIG. 7 is a schematic diagram of an architecture of a receiver according to the embodiments of the present disclosure.
FIG. 8 is a flowchart of another data receiving method according to the embodiments of the present disclosure.
FIG. 9 is a schematic diagram of composition of a communication apparatus according to the embodiments of the present disclosure.
FIG. 10 is a schematic diagram of composition of another communication apparatus according to the embodiments of the present disclosure.
FIG. 11 is a structural schematic diagram of a communication apparatus according to the embodiments of the present disclosure.

DETAILED DESCRIPTION

In order to enable those skilled in the art to better understand the technical solutions in the embodiments of the present disclosure, the technical solutions in the embodiments of present disclosure will be described below clearly and completely in conjunction with the accompanying drawings in the embodiments of present disclosure. Obviously, the described embodiments are merely a portion of embodiments of the present disclosure, but not all of embodiments of the present disclosure. All other embodiments obtained based on the embodiments of the present disclosure by an ordinary person of those skilled in the art without paying any creative effort shall be included in the protection scope of the present disclosure.

In the description of the present disclosure, unless otherwise specified, a character "/" means an "or" relationship, for example, "A/B" may represent A or B. The "and/or" herein is merely an association relationship for describing associated objects, which means that there may be three relationships, for example, A and/or B may represent: only A exists; A and B exist; or only B exists. In addition, a wording "at least one" represents a number of one or more, and "a/the plurality of" or "multiple" represents a number more than two. The wordings "first," "second," etc., do not limit quantity or an execution order, and the wordings such as "first" and "second" do not limit that corresponding objects are different, either.

It should be noted that, in the present disclosure, wordings such as "exemplary/exemplarily" or "for example" and variations thereof are used to indicate examples, instances, or illustrations. Any embodiment or design solution described in the present disclosure with wordings such as "exemplarily" or "for example" should not be illustrated as being more preferred or advantageous over other embodiments or design solutions. Specifically, the usage of the wordings such as "exemplary/exemplarily" or "for example" is intended to present relevant concepts in a concrete way.

At present, the least squares method (LS) algorithm and the minimum mean square error (MMSE) algorithm, etc., are commonly adopted for channel estimation. The zero forcing (ZF) equalization algorithm and MMSE equalization algorithm, etc., are commonly adopted for channel equalization processing. For the relevant algorithms based on non-blind channel estimation, sending end sending a pilot signal is required, resulting in pilot overhead and a decrease in communication efficiency of a wireless mobile communication system.

In view of this, a data sending method is provided in the embodiments of the present disclosure, and the data sending method includes: performing signal generation processing on data to be transmitted to obtain a communication signal, where the communication signal includes a data pilot symbol used for channel estimation, and the signal generation processing includes resource mapping processing, precoding processing, and pre-equalization processing; and sending the communication signal. In this way, transmission capacity and transmission efficiency of the wireless communication system can be improved.

In addition, a data receiving method is further provided in the embodiments of the present disclosure, and the data receiving method includes: receiving a communication signal, where the communication signal includes a data pilot symbol used for channel estimation; and performing signal analysis processing on the communication signal to obtain transmission information, where the signal analysis processing includes hard decision processing for the data pilot symbol.

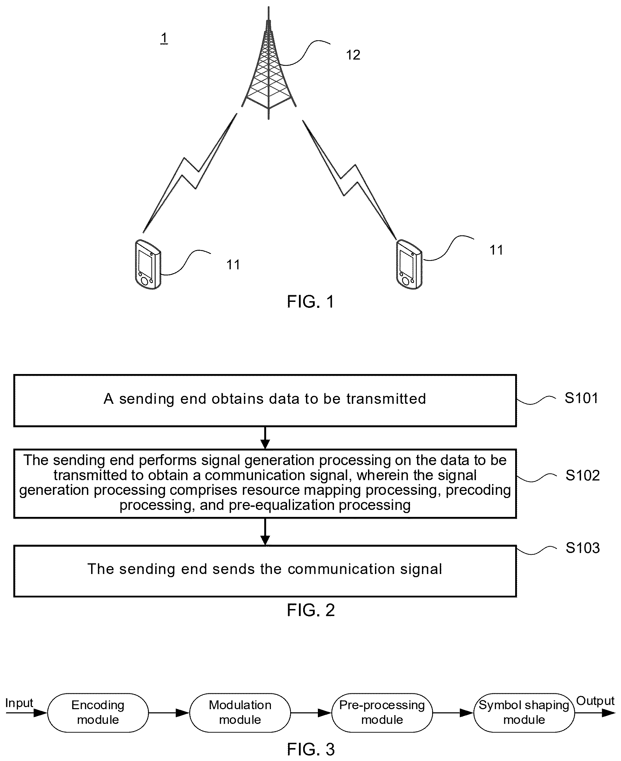

The methods provided in the embodiments of the present disclosure may be applied to various communication systems. For example, the communication system may be a long term evolution (LTE) system, a 5th generation (5G) communication system, a Wi-Fi (wireless fidelity) system, a communication system related to the 3rd generation partnership project (3GPP), a future evolved communication system (such as the 6th generation (6G) communication system, etc.), or a system that integrates multiple systems, which is not limited. Taking the communication system 100 shown in FIG. 1 as an example, the methods provided in the embodiments of the present disclosure will be described below. FIG. 1 is only a schematic diagram, and does not constitute a limitation on applicable scenarios of the technical solutions provided in the present disclosure.

FIG. 1 is a schematic diagram of an architecture of a communication system according to the embodiments of the present disclosure. As shown in FIG. 1, the communication system 1 may include one or more network devices 11 and one or more terminal devices 12. The terminal device 12 may communicate and connect with one or more network devices 11.

In some embodiments, a network device 11 may be used to implement functions such as resource scheduling, wireless resource management, and wireless access control, etc., for a terminal device. For example, a network device may be a base station transceiver, a wireless base station, a wireless transceiver, a small base station, a wireless access point, a transmission reception point (TRP), a transmission point (TP), an evolved NodeB (eNB), a home NodeB, a home evolved NodeB, a reader/writer, or any node of some other access nodes. In some embodiments, the communication system 1 may further include different types of base stations, such as a base station for macro cells and/or a base station for small cells.

The terminal device 12 may also be referred to as a terminal, a user equipment (UE), a mobile station, a mobile terminal, etc. The terminal device may be an Internet of Things (IoT) device, which is used for harvesting various information, and then performing forward error correction encoding on data information, and then sending corresponding data to the base station. The terminal device may also be a mobile phone, a pad, a computer with wireless transmission and reception functions, a car, a tram, or other mobile devices. In addition, the terminal device may be fixed or mobile. Various types of terminal devices may also include or be referred to as mobile stations, user stations, mobile units, user units, wireless units, remote units, mobile devices, wireless devices, wireless communication devices, remote devices, mobile user stations, access terminals, mobile terminals, wireless terminals, remote terminals, hand-held devices, user agents, mobile clients, clients, passive tags, or some other possible device by those skilled in the art. Various types of UEs may also be cellular phones, personal digital assistants (PDAs), wireless modems, wireless communication devices, hand-held devices, tablets, laptops, cordless phones, wireless local loop (WLL) stations, etc. Various types of UEs may communicate with various types of base stations and network devices (including macro eNB, eNB for small cells, relay base stations, etc.). The wireless communication system 1 may also include an IoT system or may be a part of an IoT system.

In some embodiments, during the communication process, a network device sends data to a terminal device, and the terminal device receives the data sent from the network device. Thus, the network device may be referred to as a sending end. Correspondingly, the terminal device may be referred to as a receiving end. Alternatively, in a case where a terminal device sends data to a network device, the network device may be referred to as the receiving end. Correspondingly, the terminal device may be referred to as the sending end.

It should be noted that FIG. 1 is merely an exemplary framework diagram, and a number of devices or nodes and names of the various devices included in FIG. 1 are not limited. In addition to functional nodes shown in FIG. 1, the communication system may further include other nodes or devices, such as a core network device.

Application scenarios of the embodiments of the present disclosure are not limited. The system architecture and service scenarios described in the embodiments of the present disclosure are intended to illustrate the technical solutions of the embodiments of the present disclosure more clearly, and do not constitute a limitation on the technical solutions provided in the embodiments of the present disclosure. A person of ordinary skill in the art may appreciate that with the evolution of network architecture and the emergence of new service scenarios, the technical solutions provided in the embodiments of the present disclosure are also applicable to similar technical problems.

The embodiments provided in the present disclosure will be introduced below with reference to the accompanying drawings of the specification.

As shown in FIG. 2, a data sending method is provided for the embodiments of the present disclosure, and the data sending method includes the following S101 to S103.

In S101, a sending end acquires data to be transmitted.

In S102, the sending end performs signal generation processing on the data to be transmitted to obtain a communication signal. The signal generation processing includes resource mapping processing, precoding processing, and pre-equalization processing.

In some embodiments, the communication signal includes a data pilot symbol, and the data pilot symbol is used for channel estimation. In some embodiments, the communication signal includes a data pilot symbol, and the data pilot symbol is used for channel estimation and carrying data.

In addition, the communication signal may further include a data symbol, and the data symbol is used for carrying data.

In some embodiments, the above-mentioned data to be transmitted may include first data to be transmitted and second data to be transmitted. The sending end may generate the data pilot symbol based on the first data to be transmitted, and generate the data symbol based on the second data to be transmitted.

In some embodiments, the sending end may perform encoding and modulation, resource mapping, pre-processing, and symbol shaping processing on the data to be transmitted to generate the above-mentioned communication signal. For example, the sending end may perform encoding and modulation, resource mapping, pre-processing, and symbol shaping processing on the first data to be transmitted to generate the data pilot symbol. Moreover, the sending end may perform encoding and modulation, resource mapping, pre-processing, and symbol shaping processing on the second data to be transmitted to generate the data symbol.

In some embodiments, the communication system may include at least one transmitter and at least one receiver. Each transmitter may be connected to at least one sending end, and a sending end may be a network device or terminal device in the above-mentioned communication system 1. For example, as shown in FIG. 3, the architecture of the transmitter may include an encoding module, a modulation module, a pre-processing module, and a symbol shaping module.

In some embodiments, a modulation and coding scheme (MCS) used for the data symbol and the MCS used for the data pilot symbol are configured independently from each other. In this way, a suitable MCS configurations for the data pilot symbol or data symbol may be selected based on the actual usage environment, thereby achieving better transmission effect.

In one example, a process of the sending end performing signal generation processing on the data to be transmitted to generate the communication signal may be implemented as the following Sa1 to Sa4.

In Sa1, the sending end performs encoding and modulation on the data to be transmitted to obtain a modulation symbol.

In some embodiments, the sending end may first determine numbers of transmission information bits for the data pilot symbol and data symbol based on a number of resource blocks (RBs) for transmission scheduling, a number of spatial streams, and an MCS index value, then generates transmission bit information for the data pilot symbol (which is also referred to as the first data to be transmitted) based on the number of transmission information bits for the data pilot symbol and the above-mentioned data to be transmitted, and generates transmission bit information for the data symbol (which is also referred to as the second data to be transmitted) based on the number of transmission information bits for the data symbol and the above-mentioned data to be transmitted.

Therefore, the sending end may perform channel encoding processing on the above-mentioned data to be transmitted to obtain encoded bit data. For the channel encoding manner, manners such as low density parity check code (LDPC), Polar coding, etc., may be adopted.

In some embodiments, the above-mentioned pilot symbol includes a first pilot symbol and a second pilot symbol. The sending end may generate a first modulation symbol based on the first data to be transmitted, and generate a second modulation symbol based on the second data to be transmitted.

Exemplarily, in the communication system 1, the data is a single stream, the network device and terminal device are configured with a single antenna, a number of scheduled RBs is 52, the MCS for the data pilot symbol is equal to 0, the MCS for data symbols is equal to 10, and a pilot signal is inserted per two resource elements (REs) in the channel sounding reference signal (SRS). In communication system 1, a channel estimation value obtained by the network device based on a SRS signal sent from the terminal device may be a channel matrix $\mathbf{H} = [h_1, h_2, ..., h_{31}]^T$, and a channel dimension is 312*1, a number N of frequency domain REs is equal to 312, a number Ka of SRS receiving antennas is equal to 1, a number P of spatial streams is equal to 1, and a rank indicator RI=1. At this time, the number of RBs bound for precoding in the physical downlink shared channel (PDSCH) is $N_{RB,w}$ = 2; parameters for pre-equalization processing RBs are $N_{RB,p}$ = 26, and $N_{renum}$=6; and a total transmission bandwidth is divided into 2 sub-bands, with each sub-band containing 13 RB blocks.

In one example, taking the first data to be transmitted as an example, in the above communication system 1, the sending end may determine the modulation manner of the data pilot symbol as quadrature phase shift keying (QPSK) based on the MCS=0 of the data pilot symbol, so that the sending end may determine the number of transmission information bits of the data pilot symbol based on the modulation manner with QPSK and the number 52 of RBs of the data pilot symbol. Furthermore, the sending end may generate the first data to be transmitted $TBS_{pw,bit}$ based on the number of transmission information bits of the data pilot symbol and the data to be transmitted. Moreover, the sending end may use a coding manner with LDPC to perform encoding processing on the first data to be transmitted $TBS_{pw,bit}$, so as to obtain the encoded bit data $Data_{pw,code}$ = $LDPC_{code}(TBS_{pw,bit})$.

In some embodiments, after performing encoding on the first data to be transmitted to obtain the encoded bit data, modulation processing may be performed on the encoded bit data according to the modulation order corresponding to the data pilot symbol to obtain the first modulation symbol.

For example, taking the above-mentioned communication system 1 as an example, the sending end may determine the modulation order of the data pilot symbol as $Q_{m,pw}$ = 2 based on the MCS=0 of the data pilot symbol. Then the sending end may performing modulation processing on the encoded bit data $Data_{pw,code}$ obtained by performing encoding processing on the first data to be transmitted $TBS_{pw,bit}$ to obtain the first modulation symbol $Data_{pw,sym}$=Modulate($Data_{pw,code}$,2).

In another example, taking the second data to be transmitted as an example, in the above-mentioned communication system 1, the sending end may determine the modulation manner of the data symbol as 16QAM (quadrature amplitude modulation) based on the MCS=10 of the data symbol, so that the sending end may determine the number of transmission information bits of the data symbol based on the modulation manner with 16QAM and the number 52 of RBs of the data symbol. Furthermore, the sending end may generate the second data to be transmitted $TBS_{da,bit}$ based on the number of transmission information bits of the data symbol and the data to be transmitted. Moreover, the sending end may use a coding manner with LDPC to perform encoding processing on the second data to be transmitted $TBS_{da,bit}$, so as to obtain the encoded bit data $Data_{da,code}$ = $LDPC_{code}(TBS_{da,bit})$.

In some embodiments, after performing encoding on the second data to be transmitted to obtain the encoded bit data, modulation processing may be performed on the encoded bit data according to the modulation order corresponding to the data symbol to obtain the second modulation symbol.

For example, taking the above-mentioned communication system 1 as an example, the sending end may determine the modulation order of the data symbol as $Q_{m,da}$ = 4 based on the MCS=10 of the data symbol. Then the sending end may performing modulation processing on the encoded bit data $Data_{da,code}$ obtained by performing encoding processing on the second data to be transmitted $TBS_{da,bit}$ to obtain the second modulation symbol $Data_{da,sym}$=Modulate($Data_{da,code}$,4).

In Sa2, the sending end performs resource mapping on the modulation symbol to obtain frequency domain data.

In some embodiments, the sending end may use N data layers to perform layer mapping on the modulation symbol to obtain the frequency domain data. N is a positive integer, and for example, a value of N may be 1, 2, 4, or any other possible numerical value.

Layer mapping is a process of mapping a modulation symbol onto different transmission layers (new data streams). A transmission layer is a transport channel, and a number of layers for transmission layers represents a number of transport channels used simultaneously. For example, a number of layers for the transmission layers is 2, which means that two transmission channels transmit information simultaneously. At the same time, information transmitted by two transmission layers may be the same or different, which is not limited thereto. In addition, the frequency domain data includes modulation symbols at various positions in various transmission layers of the one or more transmission layers.

It should be noted that due to the inconsistency between the number of code words of the data to be transmitted and the number of transmitting antennas, layer mapping is required to map the data to be transmitted to different transmitting antennas. The sending end may first re-map the first modulation symbol to a plurality of layers (new data streams) based on certain rules through layer mapping, and then map the first modulation symbol to the antenna port through certain processing.

In some embodiments, the frequency domain data may include first frequency domain data and second frequency domain data. The sending end may perform resource mapping on the first modulation symbol to obtain the first frequency domain data.

In some embodiments, in a case where the number of transmission layers for resource mapping is one, the first frequency domain data is mapped to one transmission layer, and the data in this transmission layer occupies a plurality of subcarriers of the data pilot symbol.

In some other embodiments, in a case where the number of transmission layers for resource mapping is plurality, the first frequency domain data is mapped to the plurality of transmission layers, and data in different transmission layers of the plurality of transmission layers occupy different subcarriers of the data pilot symbol. For example, the transmitting end may periodically allocate the first frequency domain data to a plurality of consecutive subcarriers of the data pilot symbol by taking a number of the plurality of transmission layers as an allocation period. One allocation period includes data from respective transmission layers in all of the plurality of transmission layers.

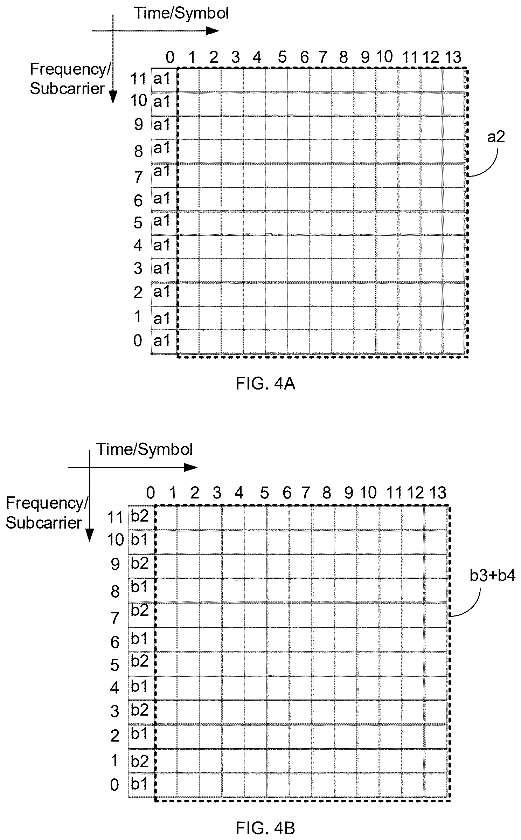

For example, in a case of N=1, the sending end may map the first modulation symbol $Data_{pw,sym}$ to the transmission layer, and the obtained first frequency domain data is $x_{pw}^{(0)}(i) = \text{Data}_{pw,sym}(i)$. For example, as shown in FIG. 4A, the sending end may map the first modulation symbol $Data_{pw,sym}$ to the transmission layer a1, and the transmission layer a1 occupies subcarriers 0-11 of the data pilot symbol.

Alternatively, in a case of N=2, the sending end may map the first modulation symbol $Data_{pw,sym}$ to two transmission layers. Therefore, the obtained first frequency domain data includes $x_{pw}^{(0)}(i) = Data_{pw,sym}(2i)$ corresponding to a first transmission layer, and $x_{pw}^{(1)}(i) = Data_{pw,sym}(2i+1)$ corresponding to a second transmission layer.

For example, as shown in FIG. 4B, subcarriers occupied by data of transmission layer b1 (the first transmission layer) include subcarriers 0, 2, 4, 6, 8, and 10, while subcarriers occupied by data of transmission layer b2 (the second transmission layer) include subcarriers 1, 3, 5, 7, 9, and 11. The transmitting end periodically allocates the first frequency domain data to the plurality of consecutive subcarriers 0-11 of the data pilot symbol by taking the number 2 of transmission layers as the allocation period. For example, subcarriers in one allocation period may include subcarriers 0 and 1, 2 and 3, etc. Taking subcarriers 0 and 1 as an example, data of transmission layer b1 may occupy subcarrier 0, and data of transmission layer b2 may occupy subcarrier 1.

Alternatively, in a case of N=4, the sending end may map the first modulation symbol $Data_{pw,sym}$ to four transmission layers. Therefore, the obtained first frequency domain data includes $x_{pw}^{(0)}(i) = Data_{pw,sym}(4i)$ corresponding to a first transmission layer, $x_{pw}^{(1)}(i) = Data_{pw,sym}(4i+1)$ corresponding to a second transmission layer, $x_{pw}^{(2)}(i) = Data_{pw,sym}(4i+2)$ corresponding to a third transmission layer, and $x_{pw}^{(3)}(i) = Data_{pw,sym}$ (4i + 3) corresponding to a fourth transmission layer.

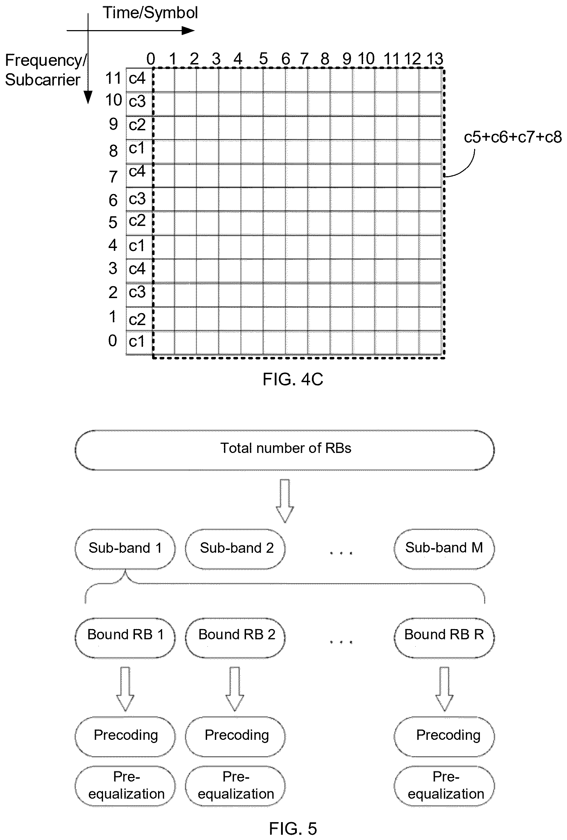

For example, as shown in FIG. 4C, subcarriers occupied by data of transmission layer c1 (first transmission layer) include subcarriers 0, 4, and 8, subcarriers occupied by data of transmission layer c2 (second transmission layer) include subcarriers 1, 5, and 9, subcarriers occupied by data of transmission layer c3 (third transmission layer) include subcarriers 2, 6, and 10, and subcarriers occupied by data of transmission layer c4 (fourth transmission layer) include subcarriers 3, 7, and 11. The transmitting end periodically allocates the first frequency domain data to the plurality of consecutive subcarriers 0-11 of the data pilot symbol by taking the number 4 of transmission layers as the allocation period. For example, subcarriers in one allocation period may include subcarriers 0-3, 4-7, etc. Taking subcarriers 0-3 as an example, data of transmission layer c1 may occupy subcarrier 0, data of transmission layer c2 may occupy subcarrier 1, data of transmission layer c3 may occupy subcarrier 2, and data of transmission layer c4 may occupy subcarrier 3.

In some embodiments, the sending end may also perform resource mapping on the second modulation symbol to obtain the second frequency domain data.

In some embodiments, data of the plurality of transmission layers (data streams) in the second frequency domain data may be stacked.

For example, in a case of N=1, the sending end may map the second modulation symbol $Data_{da,sym}$ to the transmission layer, and the obtained second frequency domain data is $x_{da}^{(0)}(i) = Data_{da,sym}(i)$. For example, as shown in FIG. 4A, the sending end may map the second modulation symbol $Data_{da,sym}$ to the transmission layer a2, and the transmission layer a2 occupies subcarriers 0-11 of the data symbol.

Alternatively, in a case of N=2, the sending end may map the second modulation symbol $Data_{da,sym}$ to two transmission layers. Therefore, the obtained second frequency domain data includes $x_{da}^{(0)}(i) = Data_{da,sym}(2i)$ corresponding to a second transmission layer, and $x_{da}^{(1)}(i) = Data_{da,sym}(2i+1)$ corresponding to a second transmission layer. For example, as shown in FIG. 4B, the data of transmission layer b3 (first transmission layer) and the data of transmission layer b4 (second transmission layer) are stacked, jointly occupying a plurality of subcarriers of a plurality of data symbols.

Alternatively, in a case of N=4, the sending end may map the second modulation symbol $Data_{da,sym}$ to four transmission layers. Therefore, the obtained first frequency domain data includes $x_{da}^{(0)}(i) = Data_{da,sym}(4i)$ corresponding to a first transmission layer, $x_{da}^{(1)}(i) = Data_{da,sym}(4i+1)$ corresponding to a second transmission layer, $x_{da}^{(2)}(i) = Data_{da,sym}(4i+2)$ corresponding to a third transmission layer, and $x_{da}^{(3)}(i) = Data_{da,sym}$ (4i + 3) corresponding to a fourth transmission layer. For example, as shown in FIG. 4C, data of transmission layer c5 (first transmission layer), data of transmission layer c6 (second transmission layer), data of transmission layer c7 (third transmission layer), and data of transmission layer c8 (fourth transmission layer) are stacked, jointly occupying a plurality of subcarriers of a plurality of data symbols.

Taking the above-mentioned communication system 1 as an example, in a case where the number of transmission layers is 1, the obtained frequency domain data may include $x_{da}^{(0)}(i) = \text{Data}_{da,sym}(i)$ and $x_{pw}^{(0)}(i) = \text{Data}_{pw,sym}(i)$.

In Sa3, the sending end performs pre-processing on the frequency domain data to obtain pre-processed frequency domain data.

In some embodiments, the sending end performs pre-processing on the first frequency domain data to obtain pre-processed first frequency domain data. In addition, the sending end may further performs pre-processing on the second frequency domain data to obtain pre-processed second frequency domain data.

In some embodiments, the pre-processing includes precoding processing and pre-equalization processing.

The pre-equalization processing refers to the technique of filtering signals before the signals pass through a channel in a signal transmission process of a communication system, in order to reduce or eliminate inter symbol interference and improve channel characteristics. The precoding processing refers to a process of performing weighting and phase adjustment on signals from a plurality of antennas to eliminate interference.

In one implementation, the sending end may first perform precoding processing on the frequency domain data and then perform pre-equalization processing to complete the pre-processing. Alternatively, the sending end may first perform pre-equalization processing on the frequency domain data and then perform precoding processing to complete the pre-processing.

In some embodiments, a precoding weight value adopted for the precoding processing is determined according to at least one of the following parameters: a total number of resource blocks (RBs) included in a data transmission bandwidth, a channel matrix H, a number of precoding RBs, a number of receiving antennas, a number of transmission layers, and a number of resource elements (REs) in frequency domain.

In some embodiments, as shown in FIG. 5, the sending end may acquire signal information based on SRS, and then divide the data transmission bandwidth into a plurality of sub-bands based on the total number of resource blocks (RBs) included in the data transmission bandwidth, the number of precoding RBs, and the number of pre-equalization RBs, and channel information is also divided based on respective sub-bands. For example, taking the above-mentioned communication system 1 as an example, the total number of RBs of the data transmission bandwidth is 52, the number $N_{RB,w}$ of precoding RBs is 2, and the number $N_{RB,P}$ of pre-equalization RBs is 26. At this time, the data transmission bandwidth is divided into M = $N/N_{RB,P}$ = 2 sub-bands in equal distribution, and the corresponding channel information is also divided according to the sub-bands.

For example, assuming that a weight value of an $i$-$th$ bound RB block of an $m$-th sub-band is $W_{m,i}$, the sending end may first determine an average value of a channel matrix of the RB, and then determine a precoding weight value based on the channel average value.

An average value of a channel matrix H of a RB is determined based on the following formula (1):

$$H_{\text{mean}}^{m,,i} = \frac{1}{N_{\text{renum}}} \sum\nolimits_{re=(i-1)N_{renum}}^{i.N_{renum}-1} H_{re,ka}^{p,m} \qquad \text{Formula (1)}$$

In the above formula, $H_{\text{mean}}^{m,i}$ is an average value of a channel matrix H of an $i$-th bound RB block of an $m$-th sub-band, $N_{\text{renum}}$ is a number of REs included in the RB block, $H_{re,ka}^{p,m}$ is a channel matrix of an m-th sub-band of a RE with an identifier re between an ka-th receiving antenna and a stream number p.

Furthermore, in a case where the resource mapping includes a single transmission layer, the precoding weight is determined through normalization processing. For example, a precoding weight value $W_{m,i}$ may be determined based on the following formula (2).

$$W_{m,i} = \text{norm}(\text{conj}(H_{\text{mean}}^{m,i})) \qquad \text{Formula (2)}$$

In a case where the resource mapping includes a plurality of transmission layers, a precoding weight value may be determined by using ZF algorithm, MMSE algorithm, or other possible precoding algorithms.

In one example, taking the ZF algorithm as an example, a precoding parameter $W_{zf}$ may be initially calculated based on formula (3) and formula (4), and then normalization processing is performed on $W_{zf}$ based on formula (5) to obtain a precoding weight $W_{m,i}$:

$$R_h = H_{mean}^{m,i} \cdot (H_{mean}^{m,i})^H \qquad \text{Formula (3)}$$

$$W_{zf} = \left( H_{mean}^{m,i} \right)^H (R_h)^{-1} \qquad \text{Formula (4)}$$

the normalization processing:

$$W_{m,i} = \text{norm}(W_{zf}) \qquad \text{Formula (5)}$$

In one example, taking the MMSE algorithm as an example, a precoding parameter $W_{mmse}$ may be initially calculated based on formula (6), formula (7) and formula (8), and then normalization processing is performed on $W_{mmse}$ based on formula (9) to obtain a precoding weight $W_{m,i}$:

$$R_h = H_{mean}^{m,i} \cdot \left( H_{mean}^{m,i} \right)^H \qquad \text{Formula (6)}$$

$$R_h = R_h + \sigma^2 I \qquad \text{Formula (7)}$$

$$W_{mmse} = \left( H_{mean}^{m,i} \right)^H (R_h)^{-1} \qquad \text{Formula (8)}$$

the normalization processing:

$$W_{m,i} = \text{norm}(W_{mmse}) \qquad \text{Formula (9)}$$

In some embodiments, the sending end may determine precoding weight values of respective RBs in respective sub-bands based on the above-mentioned manners for precoding processing. For example, a precoding weight value is a precoding matrix, and the frequency domain data corresponding to a RB may be multiplied by this matrix to obtain the frequency domain data obtained through the precoding processing.

In some embodiments, the pre-equalization weight value is determined according to the following parameters: an average channel energy value of a sub-band and an average channel energy value of RBs under the sub-band.

For example, an average channel energy value $P_{m,sub}$ of a sub-band is determined based on the following formula (10):

$$P_{m,sub} = \frac{1}{N_{RB,P} . N_{renum}} \sum_{re=0}^{N_{RB,P} . N_{renum} - 1} |H_{re}^m| \qquad \text{Formula (10)}$$

In the above formula, $N_{RB,P}$ is a number of RBs included in a sub-band, $N_{renum}$ is a number of REs included in a RB, and $H_{re}^m$ is a channel matrix of a RE with an identifier re.

An average channel energy value $P_{m,i,rb}$ of a RB is determined based on the following formula (11):

$$P_{m,i,rb} = \frac{1}{N_{renum}} \sum_{re=(i-1).N_{renum}}^{i.N_{renum} - 1} |H_{re}^m| \qquad \text{Formula (11)}$$

In the above formula, $N_{renum}$ is a number of REs included in a RB, and $H_{re}^m$ is a channel matrix of a RE with an identifier re.

A pre-equalization weight value $P_{m,i}$ of an i-th bound RB block of an m-th sub-band is determined based on the following formula (12):

$$P_{m,i} = P_{m,sub}/P_{m,i,rb} \qquad \text{Formula (12)}$$

In some embodiments, the sending end may determine pre-equalization weight values of respective RBs in respective sub-bands based on the above-mentioned manners for pre-equalization processing. For example, a pre-equalization weight value is a pre-equalization matrix, and the frequency domain data corresponding to a RB may be multiplied by this matrix to obtain the frequency domain data obtained through the pre-equalization processing.

In another implementation, the sending end may first determine a pre-processing weight value, and then perform pre-processing on the first frequency domain data based on the pre-processing weight value.

In some embodiments, the sending end may determine the pre-processing weight value based on the precoding weight value used in the above precoding process and the pre-equalization weight value used in the above pre-equalization process. For example, the pre-processing weight value is equal to a product of the precoding weight value and the pre-equalization weight value. In addition, the frequency domain data corresponding to a RB may be multiplied by a matrix corresponding to the precoding weight value to obtain the pre-processed frequency domain data.

For example, a pre-processing weight value $w_{m,i}$ may be determined based on the following formula (13).

$$w_{m,i} = W_{m,i} * P_{m,i} \qquad\qquad \text{Formula (13)}$$

In Sa4, the sending end performs symbol shaping processing on the pre-processed frequency domain data to obtain the communication signal.

In some embodiments, the sending end performs symbol shaping processing on the pre-processed first frequency domain data to obtain the data pilot symbol. For example, the sending end may obtain the data pilot symbol $Y_{pw}$. In addition, the sending end performs symbol shaping processing on the pre-processed second frequency domain data to obtain the data symbol. For example, the sending end may obtain the data symbol $Y_{da}$.

In some embodiments, the sending end may perform symbol shaping processing on the pre-processed frequency domain data to obtain orthogonal frequency division multiplexing (OFDM) symbols that is capable of being transmitted. OFDM is a multi-carrier transmission technology that uses a large number of adjacent orthogonal subcarriers (SCs), each of which is modulated using modulation techniques such as BPSK (binary phase shift keying) and QAM. This OFDM technology has the capability for transmission with a high speed rate, and can effectively combat frequency selective fading.

In some embodiments, the symbol shaping processing may include the sending end performing inverse fast Fourier transform (IFFT) on the obtained frequency domain data. In some embodiments, the symbol shaping processing may further include introducing cyclic prefix (CP) processing.

In one example, the sending end may perform inverse fast Fourier transform (IFFT) on the obtained frequency domain data to obtain the time-domain OFDM signal to be transmitted.

In another example, the sending end may further introduce CPs between various subcarriers. Exemplarily, after obtaining the time-domain OFDM signal to be transmitted through IFFT processing, a CP corresponding to a subcarrier spacing of the time-domain OFDM signal may be added. Thus, in a case of sending a data frame, the sending end may send both the time-domain OFDM signal and the CP. It should be noted that the sending end introduces cyclic prefixes (CP) between various subcarriers to prevent inter-carrier interference (ICI).

In some embodiments, the sending end may not introduce CPs between various subcarriers to improve transmission efficiency.

In S103, the sending end sends the communication signal.

Based on the above-mentioned embodiments, the distortion caused by the channel may be offset through the comprehensive functions of precoding processing and pre-equalization processing to achieve pilot-free mobile communication, thereby improving communication efficiency. Moreover, all symbols included in the communication signal may carry the data information to be transmitted without incurring pilot overhead, thereby improving the transmission capacity and transmission efficiency of the wireless communication system.

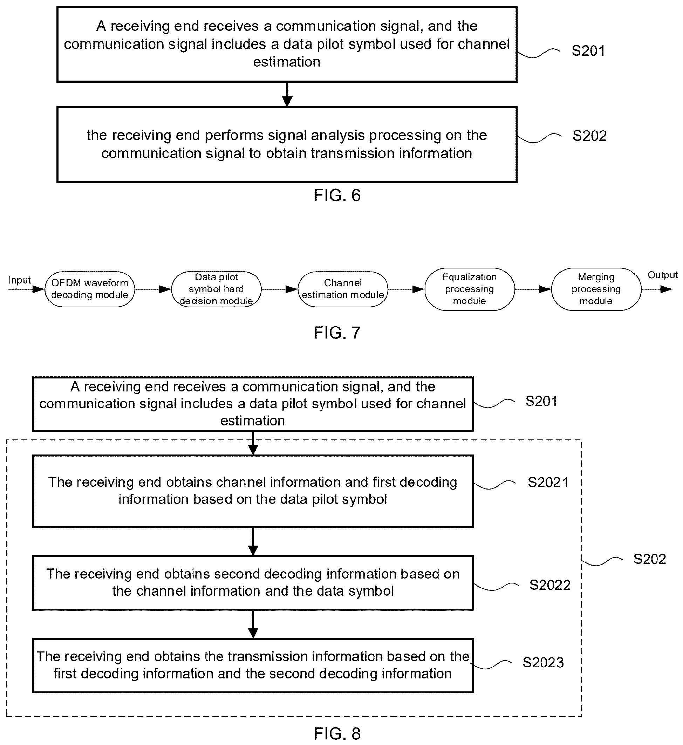

In some embodiments, a data receiving method is further provided in the embodiments of the present disclosure, as shown in FIG. 6, and the data receiving method includes the following S201 and S202.

In S201, a receiving end receives a communication signal, and the communication signal includes a data pilot symbol used for channel estimation.

In some embodiments, the data pilot symbol is further used for carrying data. In addition, the communication signal further includes a data symbol, and the data symbol is used for carrying data.

In S202, the receiving end performs signal analysis processing on the communication signal to obtain transmission information.

In some embodiments, the signal analysis processing includes hard decision processing for the data pilot symbol.

In some embodiments, the signal analysis processing may further include OFDM waveform decoding processing. The receiving end may perform CP removal and Fast Fourier Transform (FFT) processing on a received OFDM signal.

In some embodiments, the signal analysis processing may further include channel estimation processing, equalization processing, decoding processing, and data merging processing.

In some embodiments, a communication system may include at least one transmitter and at least one receiver. Each receiver may be connected to at least one receiving end, and the receiving end may be a network device or terminal device in the above-mentioned communication system 1. For example, as shown in FIG. 7, the architecture of the receiver may include an OFDM waveform decoding module, a data pilot symbol hard decision module, a channel estimation module, an equalization processing module, and a merging processing module.

In some embodiments, as shown in FIG. 8, the receiving end may, for example, perform the following S2021 to S2023 to perform signal analysis processing on the communication signal and obtain the transmission information.

In S2021, the receiving end obtains channel information and first decoding information based on the data pilot symbol.

In some embodiments, the receiving end may perform hard decision processing on the data pilot symbol to obtain a hard decision symbol sequence, and then perform channel estimation based on the hard decision symbol sequence to obtain the channel information.

The above-mentioned hard decision processing refers to a demodulator directly judging a received signal waveform based on a decision threshold of the demodulator and outputting 0 or 1, that is, the demodulator only takes 0 or 1 for each symbol supplied to a decoder for decoding.

In one implementation, the receiving end may perform hard decision processing on the data pilot symbol to obtain the hard decision symbol sequence.

For example, the receiving end may select a corresponding constellation diagram based on a modulation order $Q_{m,pw}$ of the data pilot symbol at this time, respectively calculate distances between the received data pilot symbol and points on the constellation diagram, determine a value of a closest point on the constellation diagram as a value of the received data pilot symbol, and determine an output result (that is, the hard decision symbol sequence $RY_{hard,pw}$=Hard-ProModu($RX_{hard,pw}$,$Q_{m,pw}$) based on the value of the closest point on the constellation diagram.

It should be noted that the above-mentioned direct hard decision processing manner is suitable for use in good channel environments since this manner is relatively simple and easy to use. The receiving end may first determine the channel environment before performing the hard decision processing, and determine the hard decision processing manner to be used based on the channel environment. In a case of a good channel environment, the above-mentioned direct hard decision processing manner is chosen, or in a case of a poor channel environment, other possible hard decision processing manners may be chosen.

In some embodiments, the receiving end may also perform channel estimation based on the data pilot symbol and the hard decision symbol sequence to obtain the channel information.

For example, the receiving end may perform channel estimation processing on the data pilot symbol based on the received data pilot symbol $Y_{pw}$, the hard decision symbol sequence $RY_{hard,pw}$, and LS algorithm to obtain the channel $H_{LS}$ = $LS(Y_{pw}, RY_{hard,pw})$.

In one example, taking the communication system 1 as an example, the data in the communication system 1 is a single stream, the network device and terminal device are configured with a single antenna, the number of scheduled RBs is 52, the MCS for the data pilot symbol is equal to 10, the MCS for the data symbol is equal to 19, and a pilot signal is inserted per two REs in SRS. In the communication system 1, a channel estimation value obtained by the network device based on a SRS signal sent from the terminal device may be a channel matrix $\mathbf{H} = [h_1,h_2,...,h_{31}]^T$, and a channel dimension is 312*1, N=312, Ka=1, P=1, RI=1.

In a case of good channel quality, a signal on the data pilot symbol may be directly subjected to hard decision processing, and 16QAM modulation is used for the data pilot symbol. Distances between points on the data pilot symbol and points on the 16QAM constellation diagram may be calculated respectively, and a value of a closest point on the constellation diagram is selected as the hard decision symbol sequence. Then, a result $RY_{hard,pw}$=HardProModu($RX_{hard,pw}$,4) is output.

In another implementation, the receiving end may use a manner of decoding combined with searching to perform hard decision processing on the data pilot symbol, so as to obtain the hard decision symbol sequence for channel estimation processing.

Exemplarily, the receiving end may first perform the hard decision processing on the data pilot symbol to obtain a first hard decision symbol sequence. Furthermore, a plurality times of phase adjustment are performed on the data pilot symbol, and soft decision is performed on a data pilot symbol obtained after each time of phase adjustment is performed to obtain decoding information corresponding to each time of phase adjustment.

In a case where all of decoding information corresponding to the plurality times of phase adjustment fail verification, the receiving end may determine the first hard decision symbol sequence as the hard decision symbol sequence used for channel estimation processing. Furthermore, the receiving end may perform channel estimation based on the first hard decision symbol sequence and the data pilot symbol to obtain the channel information.

Alternatively, in a case where decoding information corresponding to one time of phase adjustment passes the verification, the verified decoding information is modulated to obtain a second hard decision symbol sequence, and the second hard decision symbol sequence is determined as the hard decision symbol sequence used for channel estimation processing. Furthermore, the receiving end may further perform channel estimation based on the second hard decision symbol sequence and the data pilot symbol to obtain the channel information.

It should be noted that the above-mentioned direct hard decision processing manner is suitable for use in poor channel environments, and the accuracy of decoding may be improved based on this manner. Due to potential errors in pre-processing at the transmitting end, residual time-domain deviation or frequency-domain deviation may occur, leading to rotation in the constellation diagram of data pilot symbols and affecting the accuracy of hard decision. Therefore, a decision may be made based on the manner of decoding combined with searching to improve data accuracy.

In one example, taking the communication system 1 as an example, the data in the communication system 1 is a single stream, the network device and terminal device are configured with a single antenna, the number of scheduled RBs is 52, the MCS for the data pilot symbol is equal to 0, the MCS for the data symbol is equal to 10, and a pilot signal is inserted per two REs in SRS. In the communication system 1, a channel estimation value obtained by the network device based on a SRS signal sent from the terminal device may be a channel matrix $\mathbf{H} = [h_1, h_2, ..., h_{31}]^T$, and a channel dimension is 312*1, N=312, Ka=1, P=1, RI=1.

In a case of poor channel quality, there is a phase deviation in the constellation diagram of the data pilot signals. The signal on the data pilot symbol may be subjected to the hard decision processing through the manner of decoding combined with searching. At this time, bit information of the received data pilot signal is $RX_{soft,pw}$, a hard decision is first performed with a modulation order of 2 and adopting QPSK modulation. Then, a phase may be rotated by n/2 each time for a total of 4 times of searches. Then, the data pilot symbol is decoded through soft decision. After decoding and verification are correct, decoded bit data is remapped to symbol data and $RY_{hard,pw}$=HardProModu ($RX_{hard,pw}$,2) is output as a result of the hard decision.

For example, the above processing process may be, for example, implemented as follows:

$$\text{For n} = 1{:}4$$

$$RX_{soft,pw} = RX_{soft,pw}.exp(i * \frac{\pi}{2}(n-1))$$

$$[crc, RY_{bit,pw}] = \text{Decoder}(RX_{soft,pw})$$

$$\text{If } (crc \text{ verification is corrected})$$

$$RY_{hard,pw} = \text{Modulate}([RY_{bit,pw}, 2)$$

$$\text{break;}$$

$$\text{End}$$

$$\text{End}$$

In some embodiments, the receiving end may also perform decoding processing on the signal $Y_{pw}$ of the received data pilot symbol to obtain the bit information (i.e., first decoding information $Bit_{pw}$ = Decoder($Y_{pw}$) mentioned above) on the data pilot symbol.

In S2022, the receiving end obtains second decoding information based on the channel information and the data symbol.

In some embodiments, the receiving end may perform channel equalization processing on the data symbol based on the channel information to obtain a processed data symbol, and perform soft decision on the processed data symbol to obtain the second decoding information.

In some embodiments, the receiving end may use the ZF algorithm to perform equalization processing on the received data symbol $Y_{da}$ to obtain a equalized data symbol $X_{da}$ = Equal($Y_{da}, H_{LS}$).

Furthermore, the receiving end may perform decoding processing on the equalized data symbol $X_{da}$ and calculate a log-likelihood ratio (LLR) value for soft decision processing to verify the correctness of the decoding. Bit information of a decoded data symbol may be $Bit_{da}$ = Decoder($X_{da}$), which is the second decoding information.

In S2023, the receiving end obtains the transmission information based on the first decoding information and the second decoding information.

In some embodiments, the receiving end may merge the first decoding information and the second decoding information to obtain the transmission information.

Based on the above embodiments, in the technical solutions, after the distortion caused by the channel is offset through the comprehensive functions of precoding processing and pre-equalization processing at the transmitting end, the channel estimation is further performed through hard decision processing at the receiving end. In this way, pilot-free transmission function may be achieved without generating pilot overhead, thereby improving the transmission capacity and transmission efficiency in the wireless communication system.

The foregoing mainly introduces the solutions provided in the present disclosure from the perspective of interaction between various nodes. It can be understood that, in order to implement the above-mentioned functions, the various nodes, such as an apparatus or device, includes corresponding hardware structures and/or software modules for performing the various functions. Those skilled in the art should easily realize that the present disclosure may be implemented in the form of hardware or a combination of hardware and computer software in combination with algorithms and steps described in the embodiments disclosed in the present disclosure. Whether a certain function is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The communication apparatus may be divided into functional modules according to the above method embodiments in the present disclosure. For example, each functional module may be divided corresponding to each function, or two or more functions may be integrated into one functional module. The integrated module may implemented in the form of hardware, or may be implemented in the form of software. It should be noted that the division for the modules in the embodiments of the present disclosure is illustrated, which is only a logical functional division, and there may be other division manners in actual implementation. The following is illustrated by adopting a division of each functional module corresponding to each function as an example.

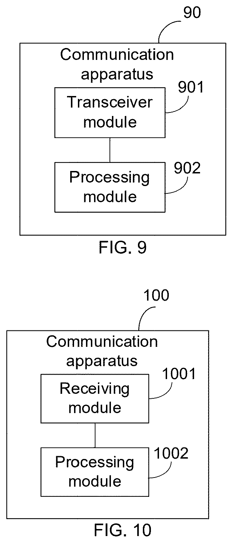

FIG. 9 is a schematic diagram of composition of a communication apparatus according to the embodiments of the present disclosure. As shown in FIG. 9, the communication apparatus 90 includes a transceiver module 901 and a processing module 902.

In some embodiments, the transceiver module 901 is configured to acquire data to be transmitted. The processing module 902 is configured to perform signal generation processing on the data to be transmitted to obtain a communication signal. The signal generation processing includes resource mapping processing, precoding processing, and pre-equalization processing. The transceiver module 901 is further configured to send the communication signal.

In some embodiments, a data pilot symbol is further used for carrying data.

In some embodiments, the data to be transmitted includes first data to be transmitted and second data to be transmitted. The processing module 902, for example, is configured to perform the signal generation processing on the first data to be transmitted to obtain a data pilot symbol; and perform the signal generation processing on the second data to be transmitted to obtain a data symbol.

In some embodiments, the processing module 902, for example, is configured to perform encoding and modulation on the first data to be transmitted to obtain a first modulation symbol; perform resource mapping on the first modulation symbol to obtain first frequency domain data; perform pre-processing on the first frequency domain data to obtain pre-processed first frequency domain data, where the pre-processing includes the precoding processing and the pre-equalization processing; and perform symbol shaping processing on the pre-processed first frequency domain data to obtain the data pilot symbol.

In some embodiments, the first frequency domain data is mapped to a transmission layer, and data in the transmission layer occupies a plurality of subcarriers of the data pilot symbol.

In some embodiments, the first frequency domain data is mapped to a plurality of transmission layers, and data in different transmission layers among the plurality of transmission layers occupy different subcarriers of the data pilot symbol.

In some embodiments, the processing module 902 is further configured to periodically allocate the first frequency domain data to a plurality of continuous subcarriers of the data pilot symbol by taking a number of the plurality of transmission layers as an allocation period. An allocation period includes data of respective transmission layers among all of the plurality of transmission layers.

In some embodiments, the processing module 902, for example, is configured to acquire a precoding weight value and a pre-equalization weight value; determine a pre-processing weight value based on the precoding weight value and the pre-equalization weight value; and adjust the first frequency domain data based on the pre-processing weight value to obtain the pre-processed first frequency domain data.

In some embodiments, the precoding weight value is determined according to at least one of the following parameters: a total number of resource blocks (RBs) included in a data transmission bandwidth, a channel matrix H, a number of precoding RBs, a number of receiving antennas, a number of transmission layers, and a number of resource elements (REs) in frequency domain.

In some embodiments, the pre-equalization weight value is determined according to the following parameters: an average channel energy value of a sub-band and an average channel energy value of RBs under the sub-band.

In some embodiments, the pre-processing weight value is equal to a product of the precoding weight value and the pre-equalization weight value.

In some embodiments, the processing module 902, for example, is configured to perform encoding and modulation on the second data to be transmitted to obtain a second modulation symbol; perform resource mapping on the second modulation symbol to obtain second frequency domain data; perform pre-processing on the second frequency domain data to obtain pre-processed second frequency domain data, where the pre-processing includes the precoding processing and the pre-equalization processing; and perform symbol shaping processing on the pre-processed second frequency domain data to obtain the data symbol.

In some embodiments, a modulation and coding scheme (MCS) adopted for the data symbol and an MCS used for the data pilot symbol are configured independently from each other.

A more detailed description of the above-mentioned processing module 902 and the transceiver module 901, as well as a more detailed description of technical features thereof and beneficial effects may refer to the corresponding method embodiments mentioned above, which will not be repeated herein.

FIG. 10 is a schematic diagram of composition of another communication apparatus according to the embodiments of the present disclosure. As shown in FIG. 10, the communication apparatus 100 includes a receiving module 1001 and a processing module 1002.

In some embodiments, the receiving module 1001 is configured to receive a communication signal, where the communication signal includes a data pilot symbol used for channel estimation. The processing module 1002 is configured to perform signal analysis processing on the communication signal to obtain transmission information. The signal analysis processing includes hard decision processing for the data pilot symbol.

In some embodiments, the data pilot symbol is further used for carrying data.

In some embodiments, the processing module 1002, for example, is configured to obtain channel information and first decoding information based on the data pilot symbol; obtain second decoding information based on the channel information and the data symbol in the communication signal; and obtain the transmission information based on the first decoding information and the second decoding information.

In some embodiments, the processing module 1002, for example, is configured to perform the hard decision processing on the data pilot symbol to obtain a hard decision symbol sequence; and perform channel estimation based on the data pilot symbol and the hard decision symbol sequence to obtain the channel information.

In some embodiments, the processing module 1002, for example, is configured to perform the hard decision processing on the data pilot symbol to obtain a first hard decision symbol sequence; perform a plurality times of phase adjustment on the data pilot symbol, and perform soft decision on a data pilot symbol obtained after each time of phase adjustment is performed, so as to obtain decoding information corresponding to each time of phase adjustment; in response to that all of decoding information corresponding to the plurality times of phase adjustment fail verification, perform channel estimation based on the first hard decision symbol sequence and the data pilot symbol, so as to obtain the channel information; in response to that decoding information corresponding to one time of phase adjustment passes the verification, perform modulation on the decoding information that passes the verification, so as to obtain a second hard decision symbol sequence; and perform channel estimation based on the second hard decision symbol sequence and the data pilot symbol to obtain the channel information.

In some embodiments, the processing module 1002, for example, is configured to perform channel equalization processing on the data symbol based on the channel information to obtain a processed data symbol; and perform soft decision on the processed data symbol to obtain the second decoding information.

A more detailed description of the above-mentioned receiving module 1001 and the processing module 1002, as well as a more detailed description of technical features thereof and beneficial effects may refer to the corresponding method embodiments mentioned above, which will not be repeated herein.

It should be noted that the modules in FIG. 9 or FIG. 10 may also be referred to as units, for example, the processing module may be referred to as a processing unit. In addition, in the embodiments shown in FIG. 9 or FIG. 10, the names of various modules may not be names as shown in the figures, for example, the receiving module or the transceiver module may also be referred to as communication module.

If the various units in FIG. 9 or FIG. 10 are implemented in the form of the software functional unit and sold or used as independent products, they may be stored in a computer-readable storage medium. Based on this understanding, the technical solutions of the present disclosure may be essentially, or a part of the technical solutions of the present disclosure that contributes to the related technologies, or all or a portion of the technical solutions of the present disclosure may be, embodied in the form of a software product, and the computer software product may be stored in a storage medium including couples of instructions, thus to enable a computer device (may be a personal computer, a server, a network device, etc.) or a processor to perform all or a portion of steps of the method in the various embodiments of the present disclosure. The storage medium for storing a computer software product includes various types of media capable of storing program codes, such as a USB flash drive, a mobile disk, a read-only memory (ROM), a random access memory (RAM), a magnetic disk, or an optical disk.

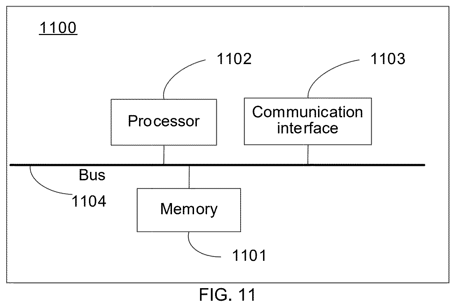

In a case of implementing the functions of the above-mentioned integrated modules by adopting the form of hardware, there is provided a structural schematic diagram of a communication apparatus in the embodiments of the present disclosure. As shown in FIG. 11, the communication apparatus 1100 includes: a processor 1102, a communication interface 1103, and a bus 1104. In some embodiments, the communication apparatus 1100 may further include a memory 1101.

The processor 1102 may implement or perform various exemplary logical blocks, modules and circuits described in combination with the present disclosure. The processor 1102 may be a central processing unit, a general purpose processor, a digital signal processor, an application specific integrated circuit, a field-programmable gate array, or other programmable logic component, a transistor logic device, a hardware component, or any combination thereof, which may implement or perform various exemplary logical blocks, modules and circuits described in combination with the present disclosure. The processor 1102 may also be a combination for implementing computing functions, for example, may be a combination including one or more microprocessors, or a combination of a DSP (digital signal processor) and a microprocessor, or the like.

The communication interface 1103 is used to connect to other devices through a communication network. The communication network may be the Ethernet, a wireless access network, a wireless local area networks (WLAN), or the like.

The memory 1101 may be a read-only memory (ROM) or other types of static storage devices that can store static information and instructions, a random access memory (RAM), or other types of dynamic storage devices that can store information and instructions, or an electrically erasable programmable read-only memory (EEPROM), a magnetic disk storage medium or any other magnetic storage devices, or any other medium that can be used to carry or store desired program codes with instructions or data and can be accessed by a computer, which is not limited thereto.

As a possible implementation, the memory 1101 may exist independently from the processor 1102, and the memory 1101 may be connected to the processor 1102 through the bus 1104, and is configured to store instructions or program codes. When the processor 1102 invokes and executes the instructions or program codes stored in the memory 1101, the processor 1102 may implement the method provided in the embodiments of the present disclosure.

In another implementation, the memory 1101 may be integrated with the processor 1102.

The bus 1104 may be an extended industry standard architecture (EISA) bus, or the like. The bus 1104 may be classified as an address bus, a data bus, a control bus, or the like. For ease of representation, only one bold line is used in FIG. 11 for representing the bus 1104, but it does not mean that there is only one bus or one type of bus.

Through the description of the above implementations, those of ordinary skill in the art can clearly understand that for the convenience and simplicity of the description, the division of the above functional modules is given merely as an example. In practical applications, the above functions can be allocated to different functional modules according to requirements, that is, the internal structure of the device or apparatus may be divided into different functional modules to complete all or part of the functions described above.

A computer-readable storage medium (for example, a non-transitory computer-readable storage medium) is further provided in the embodiments of the present disclosure. All or part of the processes in the above method embodiments may be implemented by relevant information of an information hardware indicated by computer instructions. The programs may be stored in the above-mentioned computer-readable storage medium, and when executed, the programs may include the processes as described in the above method embodiments. The computer-readable storage medium may be an internal storage in any of the aforementioned embodiments. The above-mentioned computer-readable storage medium may also be an external storage device of the above-mentioned device or apparatus, such as a plug-in hard disk, a smart media card (SMC), a secure digital (SD) card, a flash card, etc., equipped on the above-mentioned device or apparatus. Furthermore, the above-mentioned computer-readable storage medium may include both an internal storage unit and an external storage device of the above-mentioned device or apparatus. The above-mentioned computer-readable storage medium is configured to store the above-mentioned computer programs and other programs and data required by the above-mentioned device or apparatus. The above-mentioned computer-readable storage medium may further be configured to temporarily store data that has been output or is to be output.

A computer program product is further provided in the embodiments of the present disclosure. The computer program product includes computer programs that, upon being run on a computer, enable the computer to perform any one of the methods provided in the above-mentioned embodiments.

In the technical solutions provided in the embodiments of the present disclosure, the distortion caused by the channel may be offset through the comprehensive functions of precoding processing and pre-equalization processing to achieve pilot-free mobile communication, thereby improving communication efficiency. Moreover, all symbols included in the communication signal may carry the data information to be transmitted without incurring pilot overhead, thereby improving the transmission capacity and transmission efficiency of the wireless communication system. In addition, in the technical solutions provided in the embodiments of the present disclosure, after the distortion caused by the channel is offset through the comprehensive functions of precoding processing and pre-equalization processing at the transmitting end, the channel estimation is performed through hard decision processing at the receiving end. In this way, pilot-free transmission function may be achieved without generating pilot overhead, thereby improving the transmission capacity and transmission efficiency in the wireless communication system.

Although the present disclosure is described herein in conjunction with various embodiments, other variations of the disclosed embodiments may be understood and implemented by those skilled in the art by viewing the accompanying drawings, the disclosed contents, and the attached claims during the implementation of the present disclosure claimed to be protected. In the claims, "comprise/comprises/comprising" does not exclude other components or steps, and "a/an" or "one" does not exclude a number of a plurality. A single processor or other units may implement couples of functions listed in the claims. Some measures are recorded in different dependent claims, but this does not mean that these measures cannot be combined to produce good effects.

Although the present disclosure is described in conjunction with specific features and embodiments thereof, obviously, various modifications and combinations can be made thereto without departing from the spirit and scope of the present disclosure. Accordingly, the specification and accompanying drawings herein are merely exemplary illustration of the present disclosure defined by the claims, and are deemed to cover any and all modifications, variations, combinations or equivalents within the scope of the present disclosure. Obviously, those skilled in the art can make various modifications and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

The above descriptions are merely specific implements of the present disclosure, but the protection scope of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

**Claims**

1. A data sending method, **characterized by** comprising:

   acquiring data to be transmitted;
   performing signal generation processing on the data to be transmitted to obtain a communication signal, wherein the signal generation processing comprises resource mapping processing, precoding processing, and pre-equalization processing; and
   sending the communication signal.

2. The method according to claim 1, wherein the communication signal comprises a data pilot symbol, and the data pilot symbol is used for channel estimation and carrying data.

3. The method according to claim 1, wherein the data to be transmitted comprises first data to be transmitted and second data to be transmitted;
   performing the signal generation processing on the data to be transmitted to obtain the communication signal comprises:

   performing the signal generation processing on the first data to be transmitted to obtain a data pilot symbol in the communication signal; and
   performing the signal generation processing on the second data to be transmitted to obtain a data symbol in the communication signal.

4. The method according to claim 3, wherein performing the signal generation processing on the first data to be transmitted to obtain the data pilot symbol in the communication signal comprises:

   performing encoding and modulation on the first data to be transmitted to obtain a first modulation symbol;
   performing resource mapping on the first modulation symbol to obtain first frequency domain data;
   performing pre-processing on the first frequency domain data to obtain pre-processed first frequency domain data, wherein the pre-processing comprises the precoding processing and the pre-equalization processing; and
   performing symbol shaping processing on the pre-processed first frequency domain data to obtain the data pilot symbol.

5. The method according to claim 4, wherein the first frequency domain data is mapped to a transmission layer, and data in the transmission layer occupies a plurality of subcarriers of the data pilot symbol.

6. The method according to claim 4, wherein the first frequency domain data is mapped to a plurality of transmission layers, and data in different transmission layers among the plurality of transmission layers occupy different subcarriers of the data pilot symbol.

7. The method according to claim 6, further comprising: periodically allocating the first frequency domain data to a plurality of continuous subcarriers of the data pilot symbol by taking a number of the plurality of transmission layers as an allocation period, wherein an allocation period comprises data of respective transmission layers among all of the plurality of transmission layers.

8. The method according to claim 4, wherein performing the pre-processing on the first frequency domain data to obtain the pre-processed first frequency domain data comprises:

acquiring a precoding weight value and a pre-equalization weight value;
determining a pre-processing weight value based on the precoding weight value and the pre-equalization weight value; and
adjusting the first frequency domain data based on the pre-processing weight value to obtain the pre-processed first frequency domain data.

9. The method according to claim 8, wherein the precoding weight value is determined according to at least one of the following parameters: a total number of resource blocks, RBs, comprised in a data transmission bandwidth, a channel matrix, a number of precoding RBs, a number of receiving antennas, a number of transmission layers, and a number of resource elements, REs, in frequency domain.

10. The method according to claim 8, wherein the pre-equalization weight value is determined according to the following parameters: an average channel energy value of a sub-band and an average channel energy value of RBs under the sub-band.

11. The method according to claim 8, wherein the pre-processing weight value is equal to a product of the precoding weight value and the pre-equalization weight value.

12. The method according to claim 4, wherein performing the signal generation processing on the second data to be transmitted to obtain the data symbol in the communication signal comprises:

performing encoding and modulation on the second data to be transmitted to obtain a second modulation symbol;
performing resource mapping on the second modulation symbol to obtain second frequency domain data;
performing pre-processing on the second frequency domain data to obtain pre-processed second frequency domain data, wherein the pre-processing comprises the precoding processing and the pre-equalization processing; and
performing symbol shaping processing on the pre-processed second frequency domain data to obtain the data symbol.

13. The method according to claim 12, wherein a modulation and coding scheme, MCS, adopted for the data symbol and an MCS used for the data pilot symbol are configured independently from each other.

14. A data receiving method, **characterized by** comprising:

receiving a communication signal, wherein the communication signal comprises a data pilot symbol used for channel estimation; and
performing signal analysis processing on the communication signal to obtain transmission information, wherein the signal analysis processing comprises hard decision processing for the data pilot symbol.

15. The method according to claim 14, wherein the data pilot symbol is further used for carrying data.

16. The method according to claim 15, wherein the communication signal further comprises a data symbol.

17. The method according to claim 16, wherein performing the signal analysis processing on the communication signal to obtain the transmission information comprises:

obtaining channel information and first decoding information based on the data pilot symbol;
obtaining second decoding information based on the channel information and the data symbol in the communication signal; and
obtaining the transmission information based on the first decoding information and the second decoding information.

18. The method according to claim 17, wherein obtaining the channel information based on the data pilot symbol comprises:

performing the hard decision processing on the data pilot symbol to obtain a hard decision symbol sequence; and performing channel estimation based on the data pilot symbol and the hard decision symbol sequence to obtain the channel information.

19. The method according to claim 17, wherein obtaining the channel information based on the data pilot symbol comprises:

performing the hard decision processing on the data pilot symbol to obtain a first hard decision symbol sequence; performing a plurality times of phase adjustment on the data pilot symbol, and performing soft decision on a data pilot symbol obtained after each time of phase adjustment is performed, so as to obtain decoding information corresponding to each time of phase adjustment; in response to that all of decoding information corresponding to the plurality times of phase adjustment fail verification, performing channel estimation based on the first hard decision symbol sequence and the data pilot symbol, so as to obtain the channel information; in response to that decoding information corresponding to one time of phase adjustment passes the verification, performing modulation on the decoding information that passes the verification, so as to obtain a second hard decision symbol sequence; and performing channel estimation based on the second hard decision symbol sequence and the data pilot symbol to obtain the channel information.

20. The method according to claim 17, wherein obtaining the second decoding information based on the channel information and the data symbol in the communication signal comprises:

performing channel equalization processing on the data symbol based on the channel information to obtain a processed data symbol; and performing soft decision on the processed data symbol to obtain the second decoding information.

21. A communication apparatus, **characterized by** comprising: a memory and a processor, wherein the memory is coupled to the processor, the memory is configured to store instructions executable for the processor, and the processor is configured, upon the instructions being executed, to perform the method according to any one of claims 1 to 20.

22. A computer-readable storage medium, **characterized in that** computer instructions are stored on the computer-readable storage medium, in response that the computer instructions are executed on a communication apparatus, the communication apparatus is enabled to perform the method according to any one claims 1 to 20.

FIG. 1

| | |
|---|---|
| A sending end obtains data to be transmitted | S101 |

↓

| | |
|---|---|
| The sending end performs signal generation processing on the data to be transmitted to obtain a communication signal, wherein the signal generation processing comprises resource mapping processing, precoding processing, and pre-equalization processing | S102 |

↓

| | |
|---|---|
| The sending end sends the communication signal | S103 |

FIG. 2

Input → Encoding module → Modulation module → Pre-processing module → Symbol shaping module → Output

FIG. 3

Time/Symbol

Frequency/
Subcarrier

FIG. 4A

Time/Symbol

Frequency/
Subcarrier

FIG. 4B

Time/Symbol

Frequency/
Subcarrier

FIG. 4C

Total number of RBs

Sub-band 1    Sub-band 2    . . .    Sub-band M

Bound RB 1    Bound RB 2    . . .    Bound RB R

Precoding    Precoding    Precoding

Pre-equalization    Pre-equalization    Pre-equalization

FIG. 5

```
┌─────────────────────────────────────────────────────┐
│ A receiving end receives a communication signal, and the │
│ communication signal includes a data pilot symbol used for channel │──⌣ S201
│                    estimation                       │
└─────────────────────────────────────────────────────┘
                          │
                          ▼
┌─────────────────────────────────────────────────────┐
│ the receiving end performs signal analysis processing on the │──⌣ S202
│ communication signal to obtain transmission information │
└─────────────────────────────────────────────────────┘
```

FIG. 6

```
Input   ╭──────────╮   ╭──────────╮   ╭──────────╮   ╭──────────╮   ╭──────────╮   Output
───────▶│  OFDM waveform │─▶│ Data pilot │─▶│  Channel  │─▶│ Equalization │─▶│ Merging │─────▶
        │ decoding module│  │ symbol hard │  │estimation module│  │ processing │  │ processing │
        ╰──────────╯   │ decision module│  ╰──────────╯   │  module  │  │  module  │
                       ╰──────────╯                    ╰──────────╯   ╰──────────╯
```

FIG. 7

```
┌─────────────────────────────────────────────────────┐
│ A receiving end receives a communication signal, and the │
│ communication signal includes a data pilot symbol used for channel │──⌣ S201
│                    estimation                       │
└─────────────────────────────────────────────────────┘
                          │
  ┌ ─ ─ ─ ─ ─ ─ ─ ─ ─ ─ ─ │─ ─ ─ ─ ─ ─ ─ ─ ─ ─ ─ ─ ─ ┐
  │ ┌───────────────────────────────────────────────┐ │
  │ │ The receiving end obtains channel information and first decoding │──⌣ S2021
  │ │ information based on the data pilot symbol │ │
  │ └───────────────────────────────────────────────┘ │
  │                        │                           │
  │                        ▼                           │
  │ ┌───────────────────────────────────────────────┐ │
  │ │ The receiving end obtains second decoding information based on │──⌣        ⌣─ S202
  │ │ the channel information and the data symbol │   S2022
  │ └───────────────────────────────────────────────┘ │
  │                        │                           │
  │                        ▼                           │
  │ ┌───────────────────────────────────────────────┐ │
  │ │ The receiving end obtains the transmission information based on the │──⌣ S2023
  │ │ first decoding information and the second decoding information │ │
  │ └───────────────────────────────────────────────┘ │
  └ ─ ─ ─ ─ ─ ─ ─ ─ ─ ─ ─ ─ ─ ─ ─ ─ ─ ─ ─ ─ ─ ─ ─ ─ ┘
```

FIG. 8

90

**Communication apparatus**

Transceiver module — 901

Processing module — 902

FIG. 9

100

**Communication apparatus**

Receiving module — 1001

Processing module — 1002

FIG. 10

1100

1102

1103

Processor

Communication
interface

Bus

1104

Memory

1101

FIG. 11

## INTERNATIONAL SEARCH REPORT

| International application No. |
|---|
| **PCT/CN2024/073699** |

**A.    CLASSIFICATION OF SUBJECT MATTER**

H04L5/00(2006.01)i;   H04L25/03(2006.01)i

According to International Patent Classification (IPC) or to both national classification and IPC

**B.    FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, ENTXT, ENTXTC, VEN, VCN, DWPI, 3GPP: 待传输, 待发送, 资源映射, 资源单元映射, 层映射, 预编码, 预均衡, 滤波, 导频, to be transmitted, resource mapping, resource element mapping, layer mapping, precod+, pre-equalizat+, filter, pilot

**C.    DOCUMENTS CONSIDERED TO BE RELEVANT**

| Category* | Citation of document, with indication, where appropriate, of the relevant passages | Relevant to claim No. |
|---|---|---|
| Y | CN 103378885 A (HUAWEI TECHNOLOGIES CO., LTD.) 30 October 2013 (2013-10-30) claim 1, and description, paragraphs 37-56 and 97 | 1-13, 21-22 |
| Y | CN 101483503 A (HUAWEI TECHNOLOGIES CO., LTD.) 15 July 2009 (2009-07-15) claims 1, 3 and 5-6, and description, page 8, line 21 to page 9, line 10, and page 11, line 23 to page 12, line 7 | 1-13, 21-22 |
| Y | CN 206461656 U (HU, Ruichao) 01 September 2017 (2017-09-01) claims 1 and 3, and description, paragraphs 5 and 7 | 1-13, 21-22 |
| Y | CN 111245560 A (HUAWEI TECHNOLOGIES CO., LTD.) 05 June 2020 (2020-06-05) description, paragraphs 79, 180 and 188 | 1-13, 21-22 |
| Y | CN 102684819 A (HUAWEI TECHNOLOGIES CO., LTD.) 19 September 2012 (2012-09-19) claim 1, and description, paragraphs 82-91 | 1-13, 21-22 |
| A | US 2010284477 A1 (LG ELECTRONICS INC.) 11 November 2010 (2010-11-11) entire document | 1-13, 21-22 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 May 2024** | **10 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/073699**

| Box No. III | Observations where unity of invention is lacking (Continuation of item 3 of first sheet) |

This International Searching Authority found multiple inventions in this international application, as follows:

The international application has two claimed inventions:

I. Claim 1, and the solutions of claims 21-22, when referring to claim 1

II. Claim 14, and the solutions of claims 21-22, when referring to claim 14

The claims in group I relate to a data sender acquiring data to be transmitted and performing resource mapping processing, pre-coding processing and pre-equalization processing on said data so as to obtain a communication signal; and the claims in group II relate to a data receiver receiving a communication signal of a data pilot symbol used for performing channel estimation, and performing signal parsing processing on the communication signal to obtain transmission information, wherein the signal parsing processing comprises hard-decision processing performed on the data pilot symbol. It can be seen that the claims in group I and the claims in group II do not belong to a single general inventive concept, and thus do not comply with PCT Rule 13.1. The same or corresponding feature of the claims in group I and the claims in group II is that all the claims relate to the transmission of a communication signal. However, in the field of communications, transmitting a communication signal is a customary technical means in the art. Therefore, the claims in group I and the claims in group II do not have a same or corresponding special technical feature, and thus do not comply with PCT Rule 13.2.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **1-13, 21-22**

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/CN2024/073699**

| Patent document cited in search report | | | Publication date (day/month/year) | Patent family member(s) | | | Publication date (day/month/year) |
|---|---|---|---|---|---|---|---|
| CN | 103378885 | A | 30 October 2013 | None | | | |
| CN | 101483503 | A | 15 July 2009 | None | | | |
| CN | 206461656 | U | 01 September 2017 | None | | | |
| CN | 111245560 | A | 05 June 2020 | US | 2021288847 | A1 | 16 September 2021 |
| | | | | WO | 2020108062 | A1 | 04 June 2020 |
| | | | | EP | 3866361 | A1 | 18 August 2021 |
| CN | 102684819 | A | 19 September 2012 | WO | 2012122937 | A1 | 20 September 2012 |
| | | | | US | 2014029952 | A1 | 30 January 2014 |
| | | | | EP | 2683100 | A1 | 08 January 2014 |
| US | 2010284477 | A1 | 11 November 2010 | KR | 20090049972 | A | 19 May 2009 |
| | | | | WO | 2009064108 | A2 | 22 May 2009 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310786891